# DEMANDE DE BREVET EUROPEEN

(11) **EP 4 745 779 A1**
(43) Date de publication de la demande: **20.05.2026**
(21) Numéro de dépôt: 25214735.0
(22) Date de dépôt: 10.11.2025
(51) Int. Cl.: G06F 11/10, G06F 11/22, G11C 29/42, G06F 21/77, G06F 21/70

(54) **MICROCONTROLEUR**

(30) Priorité: 15.11.2024 FR 2412479
(71) Demandeur: STMicroelectronics International N.V., 1228 Plan-les-Ouates, Geneva (CH)
(72) Inventeur: BENHAMMADI, Jawad, 38800 PONT-DE-CLAIX (FR)
(74) Mandataire: Cabinet Beaumont

(57) **Abrégé**

La présente description concerne un microcontrôleur (200) comprenant une mémoire (152) ; un bloc de calcul de code de correction d'erreur (142) de cette mémoire ; un premier registre (SBS_CFGR2) ; et un premier bit (202) qui, lorsqu'il a une première valeur et que le premier registre (SBS_CFGR2) comprend une deuxième valeur (ECCL=1), entraîne l'interdiction de la modification du contenu du premier registre (SBS_CFGR2) jusqu'à ce qu'une séquence donnée soit écrite dans un deuxième registre (SBS_KEYR) du microcontrôleur (200).

## Description

### Domaine technique

La présente description concerne de façon générale les microcontrôleurs et leurs procédés de fonctionnement.

### Technique antérieure

La norme IEC 61508 est un standard international qui consiste à vérifier que la conception d'un système, comme par exemple un microcontrôleur, fonctionne correctement ou, s'il dysfonctionne, que cela puisse être de façon prédictible.

### Résumé de l'invention

Il existe un besoin d'améliorer les microcontrôleurs actuels pour qu'ils puissent mettre en œuvre la norme IEC 61508.

Un mode de réalisation pallie tout ou partie des inconvénients des microcontrôleurs connus.

Un mode de réalisation prévoit un microcontrôleur comprenant :
- une mémoire ;
- un bloc de calcul de code de correction d'erreur de cette mémoire ;
- un premier registre ; et
- un premier bit qui, lorsqu'il a une première valeur et que le premier registre comprend une deuxième valeur, entraîne l'interdiction de la modification du contenu du premier registre jusqu'à ce qu'une séquence donnée soit écrite dans un deuxième registre du microcontrôleur.

Un mode de réalisation prévoit un procédé de fonctionnement d'un microcontrôleur comprenant une mémoire, un bloc de calcul de code de correction d'erreur de cette mémoire, un premier registre, et un deuxième registre (SBS_KEYR);
procédé dans lequel, lorsqu'un premier bit est mis à une première valeur et que le premier registre comprend une deuxième valeur, cela entraîne l'interdiction de la modification du contenu du premier registre jusqu'à ce qu'une séquence donnée soit écrite dans le deuxième registre du microcontrôleur.

Selon un mode de réalisation :
- lorsque le premier registre a la deuxième valeur et qu'une ou plusieurs erreurs sont détectées par le bloc de calcul, au moins un processus mis en œuvre par le microcontrôleur est arrêté ; et
- lorsque le premier registre a une troisième valeur et qu'une ou plusieurs erreurs sont détectées par le bloc de calcul, ledit au moins un processus se poursuit.

Selon un mode de réalisation, ledit processus est un fonctionnement d'un circuit, de préférence un circuit de modulation de largeur d'impulsions, du microcontrôleur.

Selon un mode de réalisation, lorsque le contenu du premier registre a la deuxième valeur alors un générateur d'un premier signal est activé et le premier signal est à un état d'activation, et lorsque le contenu du premier registre a la troisième valeur alors le générateur est désactivé et le premier signal est à un état de désactivation.

Selon un mode de réalisation, lorsque le générateur est activé et qu'une ou plusieurs erreurs sont détectées par le bloc de calcul, alors un deuxième signal, configuré pour être présent sur une entrée d'un circuit mettant en œuvre ledit processus, prend une valeur entraînant l'arrêt dudit processus.

Selon un mode de réalisation, le premier bit, lorsqu'il a la première valeur et que le premier registre a la deuxième valeur, empêche la modification du contenu du premier registre jusqu'à réinitialisation du microcontrôleur.

Selon un mode de réalisation, le bloc de calcul de code de correction d'erreur est configuré pour détecter une seule erreur et la corriger.

Selon un mode de réalisation, le bloc de calcul de code de correction d'erreur est configuré pour détecter deux erreurs et en corriger une des deux.

Selon un mode de réalisation, le bloc de calcul de code de correction d'erreur est configuré pour détecter trois erreurs et en corriger deux des trois.

Selon un mode de réalisation, après que ladite séquence ait été écrite dans le deuxième registre, le premier bit est mis à une quatrième valeur qui autorise la modification du contenu du premier registre.

Selon un mode de réalisation, après ladite autorisation, le contenu du premier registre passe de la deuxième valeur à la troisième valeur.

Selon un mode de réalisation, lorsque le générateur est désactivé et qu'une ou plusieurs erreurs sont détectées par le bloc de calcul, alors le deuxième signal prend une valeur n'entraînant pas de modification dudit processus.

Selon un mode de réalisation, la mise à la troisième valeur du premier registre est suivie de la mise en œuvre d'un programme de test comprenant l'injection d'une ou plusieurs erreurs dans la mémoire et la vérification de la réponse du microcontrôleur.

Selon un mode de réalisation, ladite séquence correspond à l'écriture de deux clés dans le deuxième registre.

Selon un mode de réalisation, le premier registre comprend ledit premier bit.

Selon un mode de réalisation, ladite mémoire est une mémoire de type RAM.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre de façon schématique et sous forme de blocs un exemple de microcontrôleur ;
la figure 2 illustre de façon schématique et sous forme de bloc un microcontrôleur selon un mode de réalisation ;
la figure 3 représente un procédé de fonctionnement du microcontrôleur de la figure 2 selon un mode de réalisation ; et
la figure 4 représente un procédé de fonctionnement du microcontrôleur de la figure 2 selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

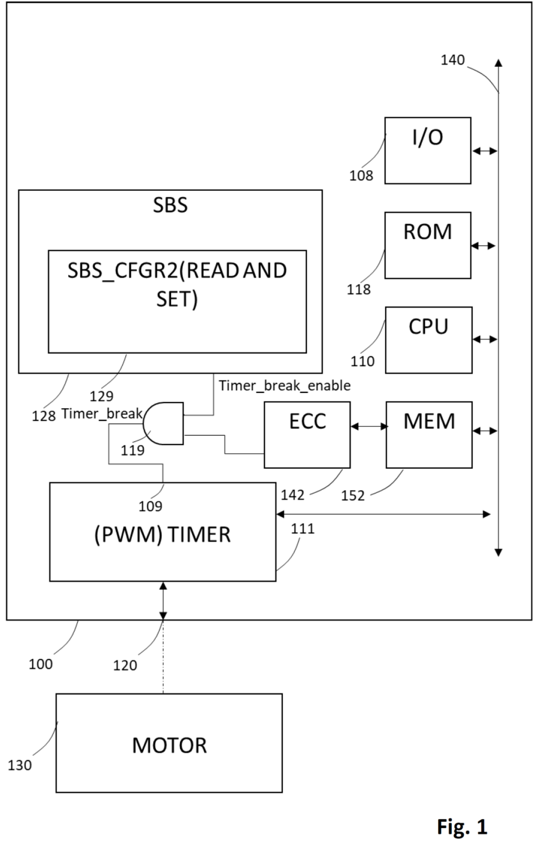

La figure 1 illustre de façon schématique et sous forme de blocs un exemple de microcontrôleur 100.

Dans l'exemple représenté, le microcontrôleur 100 comprend, par exemple, une unité de traitement 110 (CPU) comprenant un ou plusieurs processeurs sous contrôle d'instructions stockées dans une mémoire 152 (MEM), qui est par exemple une mémoire d'instruction. La mémoire 152 est par exemple une mémoire volatile de type à accès aléatoire (en anglais Random Access Memory, RAM).

L'unité de traitement 110 et la mémoire d'instructions communiquent, par exemple, via un bus système 140 (de données, d'adresses et de commande).

Le microcontrôleur 100 comprend en outre par exemple une interface d'entrée/sortie 108 (I/O) reliée au bus système 140 pour communiquer avec l'extérieur.

Dans un exemple non représenté, le microcontrôleur 100 comprend une mémoire, par exemple non-volatile (NVM), par exemple de type mémoire FLASH ou à changement de phase (Phase change memory, PCM, en anglais), capable de communiquer, via un bus de communication, avec une interface de mémoire non-volatile non représentée configurée pour écrire ou lire des données dans et depuis la mémoire.

Le microcontrôleur 100 peut intégrer d'autres circuits mettant en œuvre d'autres fonctions (par exemple, une ou plusieurs mémoires volatiles et/ou non-volatiles, ou d'autres unités de traitement), non représentées en figure 1. Parmi ces autres circuits, le microcontrôleur 100 comporte par exemple une mémoire morte ou statique 118 (ROM).

Dans l'exemple représenté, le microcontrôleur 100 comprend un bloc 111 ((PWM) TIMER) dont la fonction est de générer un signal de commande variant par exemple en modulation de largeur d'impulsion (Pulse width modulation, PWM, en anglais). Le signal de commande est par exemple appliqué au niveau d'une sortie 120 du microcontrôleur 100 ou au niveau du bloc 108 par exemple. Le bloc 111 comprend par exemple une ou plusieurs entrées 109 (appelées timer break inputs en anglais). Lorsqu'un signal Timer_break est appliqué sur cette ou ces entrées 109 et qu'il prend une valeur d'arrêt, par exemple lorsqu'il est à l'état haut ou 1, cela met à l'arrêt ou bloque le processus mis en œuvre par le bloc 111. Dans un exemple, cela arrête la génération du signal de commande par le bloc 111 sur la sortie 120. Lorsque le signal Timer_break est appliqué sur cette ou ces entrées 109 et qu'il prend une valeur de déconnexion, par exemple lorsqu'il est à l'état bas ou 0, le processus mis en œuvre par le bloc 111 continue sans modification.

Dans un exemple, la sortie 120 est reliée, préférentiellement connectée, à un dispositif externe au microcontrôleur et piloté par le signal présent sur la sortie 120, comme par exemple un moteur 130 (MOTOR).

Dans l'exemple représenté, le microcontrôleur 100 comprend un bloc de calcul de code de correction d'erreur 142 (ECC) (error correcting code en anglais) relié à la mémoire 152. Le code de correction d'erreur est un système permettant d'incorporer des bits de parité pour détecter des erreurs ayant lieu lors du fonctionnement de la mémoire 152. Il permet également la correction automatique d'une ou plusieurs erreurs selon son degré de complexité. Dans un exemple, le code de correction d'erreur est configuré pour détecter une erreur simple et la corriger. Dans un autre exemple, le code de correction d'erreur est configuré pour détecter une double erreur et en corriger une (Single Error Correction and Double Error Detection, SECDED, en anglais). Dans un autre exemple, le code de correction d'erreur est configuré pour détecter une erreur triple et corriger deux bits (DECTED).

Le microcontrôleur 100 comprend, dans l'exemple illustré, un générateur 128 (SBS) de signal configuré pour fournir un signal ou un état d'un signal Timer_break_enable. Le niveau ou l'état du signal Timer_break_enable correspond à un état de connexion entre l'entrée 109 du bloc 111 et une sortie, qui est par exemple sous forme de l'état d'un drapeau, du bloc 142. Le signal Timer_break_enable est activé ou désactivé, c'est-à-dire est l'état haut ou bas par exemple, en fonction du contenu d'un registre 129 (SBS_CFGR2(READ AND SET)). Dans un exemple, le signal Timer_break_enable est activé, c'est-à-dire par exemple à l'état haut ou correspondant à un état d'activation ou de connexion, lorsque le registre SBS_CFGR2 comprend un ou plusieurs bits correspondant à une valeur d'activation par exemple ECCL=1, et déconnecté, ou mis à zéro, lorsque ce ou ces bits correspondent à une autre valeur de déconnexion par exemple ECCL=0. Par le terme activation on entend l'activation d'une fonctionnalité d'arrêt d'un processus, et par le terme déconnexion on entend l'arrêt de cette fonctionnalité.

Dans un exemple, la mise à la fonctionnalité d'arrêt du processus mis en œuvre par le bloc 111, lorsqu'une ou plusieurs erreurs sont détectées par le bloc 142, est autorisée lorsque le registre SBS_CFGR2 comprend la valeur d'activation, qui est par exemple ECCL=1. Lorsque le registre SBS_CFGR2 comprend la valeur de déconnexion, alors la mise à la fonctionnalité d'arrêt du processus mis en œuvre par le bloc 111, lorsqu'une ou plusieurs erreurs sont détectées par le bloc 142, est désactivée. Autrement dit, dans ce dernier cas, le processus mis en œuvre par le bloc 111 continue même lorsqu'une ou plusieurs erreurs sont détectées par le bloc 142.

Dans un exemple de mise en œuvre, un bloc 119, formant une fonction logique de type « ET » (AND en anglais), prend en entrée l'état du signal, ou le signal Timer_break_enable et l'état de sortie du bloc 142. Lorsque le signal Timer_break_enable est à l'état haut ou 1, une connexion est présente entre l'entrée 109 du bloc 111 et le bloc 142. Lorsque le signal Timer_break_enable est à l'état haut ou 1, et qu'une ou plusieurs erreurs sont détectées par le bloc 142, alors le signal Timer_break est à l'état haut et la sortie du bloc logique 119 disponible sur l'entrée 109 est à l'état haut. Le processus mis en œuvre par le bloc 111 est alors arrêté. Lorsque le signal Timer_break_enable est l'état bas ou 0 ou dans un état correspondant à une déconnexion, alors, même si une ou plusieurs erreurs sont détectées par le bloc 142, le signal Timer_break est à l'état bas ou 0 en sortie du bloc logique 119 et sur l'entrée 109 du bloc 111 ce qui implique que le processus mis en œuvre par le bloc 111 continue même si des erreurs ont été détectées.

Dans un exemple, le ou les bits du registre SBS_CFGR2 qui donnent l'état de connexion entre l'entrée 109 du bloc 111 et la sortie du bloc 142, sont configurés dans un état de lecture et d'initialisation uniquement (« read and set » en anglais). Autrement dit, ces bits du registre SBS_CFGR2 sont lisibles et, une fois initialisés à une valeur donnée, alors seul un redémarrage, ou une réinitialisation, du microcontrôleur 100 permettent de les réinitialiser à une autre valeur. Cela permet d'éviter des arrêts intempestifs du bloc 111.

Dans l'exemple représenté, le registre SBS_CFGR2 est compris dans le bloc 128, toutefois le registre SBS_CFGR2 peut être agencé dans un autre endroit du microcontrôleur 100.

L'implémentation de l'exemple de la figure 1 permet de réaliser des tests sur la mémoire 152 lorsque le dispositif 130 relié, préférentiellement connecté, à la sortie 120 n'est commandé de façon active que de façon intermittente. Les phases où le dispositif 130 n'est pas actif (idle phase en anglais) sont ainsi utilisées pour effectuer des tests mémoire où des erreurs sont injectées périodiquement.

Dans le cas où le dispositif 130 est en fonctionnement continu alors le test d'erreur ne peut être réalisé avec l'exemple de la figure 1 sous peine de provoquer une interruption du fonctionnement du dispositif 130. Une solution consisterait à initialiser dès le départ le registre SBS_CFGR2 de sorte que l'état du signal Timer_break_enable soit à zéro. Néanmoins cela signifierait qu'il n'y aurait plus de possibilité d'arrêter le bloc 111 en cas d'erreurs détectées par le bloc 142.

De plus, la norme IEC 61508 dispose qu'il convient de pouvoir tester la mémoire 152 pendant le fonctionnement du dispositif 130, sans impacter son fonctionnement, tout en évitant des arrêts intempestifs. Cet aspect de la norme IEC 61508 ne peut être obtenu avec l'exemple de la figure 1.

Les modes de réalisation décrits ci-après pallient à ces inconvénients.

Les modes de réalisation décrits ci-après prévoient un microcontrôleur comprenant :
- une mémoire ;
- un bloc de calcul de code de correction d'erreur de cette mémoire ;
- un premier registre ; et
- un premier bit qui, lorsqu'il a une première valeur et que le premier registre comprend une deuxième valeur, entraîne l'interdiction de la modification du contenu du premier registre jusqu'à ce qu'une séquence donnée soit écrite dans un deuxième registre du microcontrôleur.

Les modes de réalisation présentent l'avantage de protéger le microcontrôleur 100 contre des arrêts intempestifs.

De plus la fonctionnalité d'arrêt du bloc 111 en cas de détection d'erreurs peut être désactivée le temps de la mise en œuvre de tests d'erreurs mémoire et ainsi rendre le microcontrôleur compatible avec la norme IEC 61508.

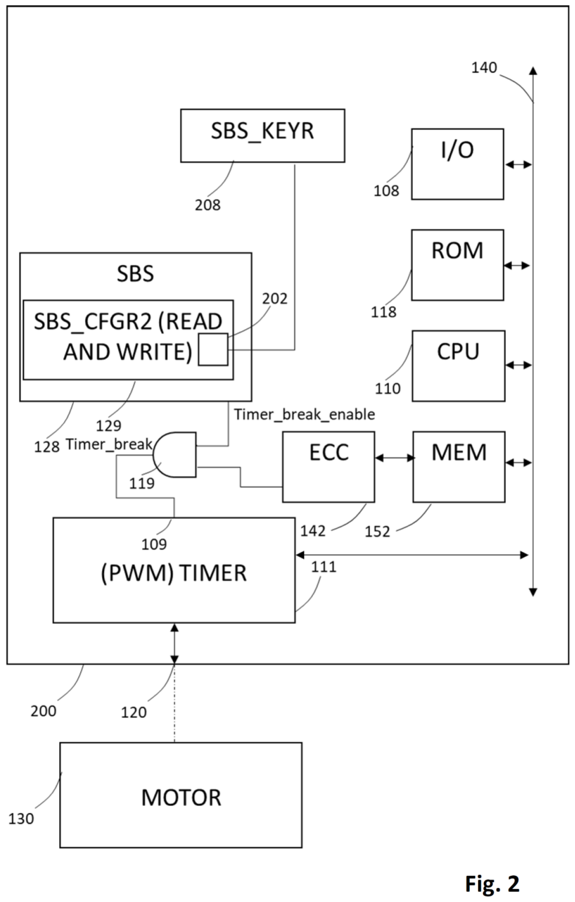

La figure 2 illustre de façon schématique et sous forme de bloc un microcontrôleur 200 selon un mode de réalisation.

Le microcontrôleur 200 de la figure 2 est similaire au microcontrôleur 100 de la figure 1 sauf que le registre SBS_CFGR2 comprend additionnellement un bit de blocage 202 (lock bit en anglais), et qu'un autre registre 208 (SBS_KEYR) est implémenté. Dans l'exemple de la figure 2, le registre SBS_CFGR2 est par exemple accessible en lecture et en écriture (READ AND WRITE en anglais). En d'autres termes, dans l'exemple représenté, le registre SBS_CFGR2 peut être initialisé puis réinitialisé à une autre valeur sans devoir réinitialiser le microcontrôleur.

Dans un exemple, le bit de blocage 202 est configuré pour, qu'une fois mis à une valeur de blocage (par exemple à 1) et que le registre SBS_CFGR2 comprend la valeur d'activation, par exemple ECCL=1, alors l'écriture d'une séquence dans le registre SBS_KEYR soit nécessaire pour pouvoir modifier le registre SBS_CFGR2 de nouveau. Cette séquence correspond, par exemple, à l'écriture d'une clé, ou par exemple de deux clés ou plus, successivement ou en même temps, dans le deuxième registre SBS_KEYR. La ou les clés sont par exemple codées sur 8 ou 16 ou 32 bits chacune. Des clés à haute entropie sont préférables.

Une fois que la séquence a été écrite dans le registre SBS_KEYR alors le bit de blocage passe à une valeur de déblocage (par exemple 0) et il est possible de modifier de nouveau le registre SBS_CFGR2. Si l'on veut pouvoir mettre en œuvre un test d'erreur mémoire sans provoquer d'arrêt du processus mis en œuvre par le bloc 111 alors le registre SBS_CFGR2 doit être modifié et comprendre la valeur de déconnexion (par exemple ECCL=0). Une fois que cela est fait, alors la fonctionnalité de mise à l'arrêt du processus mis en œuvre par le bloc 111, lorsqu'une ou plusieurs erreurs sont détectées par le bloc 142, est désactivée. Il est ainsi possible de mettre en œuvre un test comprenant l'injection d'erreurs mémoire pendant que le processus mis en œuvre par le bloc 111 se poursuit.

Une fois le test passé, le registre SBS_CFGR2 est modifié pour comprendre la valeur d'activation (par exemple ECCL=1) et le bit de blocage 202 est mis dans sa valeur de blocage (par exemple 1) pour empêcher que le registre SBS_CFGR2 puisse être modifié de façon intempestive. Dans cette configuration, une ou plusieurs erreurs mémoire détectées entraineront la mise à l'arrêt du processus mis en œuvre par le bloc 111.

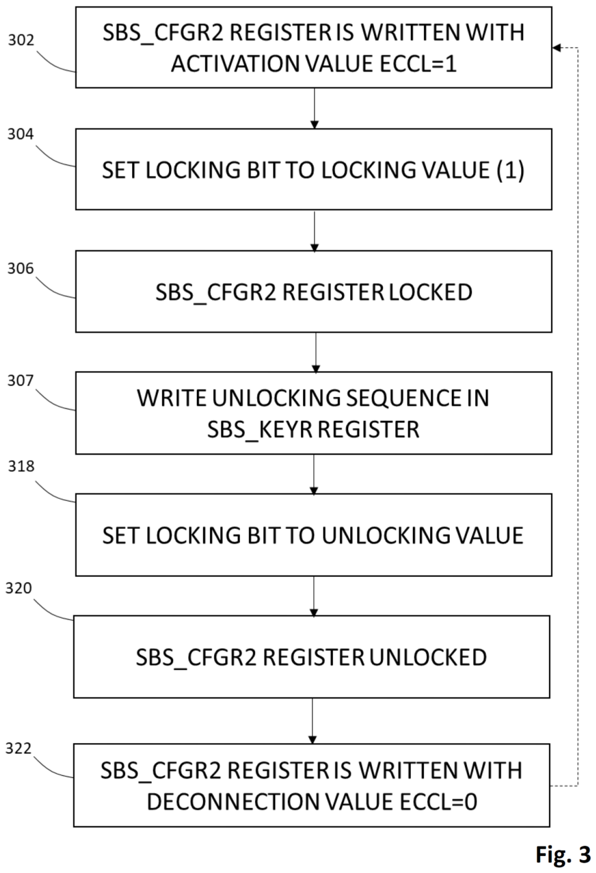

La figure 3 représente un procédé de fonctionnement du microcontrôleur de la figure 2 selon un mode de réalisation.

Dans une étape 302 (SBS_CFGR2 REGISTER IS WRITTEN WITH ACTIVATION VALUE ECCL=1), le registre SBS_CFGR2 est écrit avec la valeur d'activation (ECCL=1) permettant l'activation de la fonctionnalité d'arrêt du processus du bloc 111 lorsqu'une ou plusieurs erreurs sont détectées.

Dans une étape 304 (SET LOCKING BIT TO LOCKING VALUE (1)), par exemple postérieure à l'étape 302, le bit de blocage 202 est mis à sa valeur de blocage (par exemple 1).

Dans une étape 306 (SBS_CFGR2 REGISTER LOCKED), postérieure à l'étape 304, de par la valeur de blocage du bit de blocage 202 et le fait que le registre SBS_CFGR2 comprenne la valeur d'activation (ECCL=1), le registre SBS_CFGR2 ne peut plus être modifié sauf écriture de la séquence idoine dans le registre SBS_KEYR.

Dans une étape 307 (WRITE UNLOCKING SEQUENCE IN SBS_KEYR REGISTER), postérieure à l'étape 306, la séquence idoine est écrite dans le registre SBS_KEYR pour permettre in fine la modification du registre SBS_CFGR2.

Dans une étape 318 (SET LOCKING BIT TO UNLOCKING VALUE), postérieure à l'étape 307, le bit de blocage est mis à sa valeur de déblocage (par exemple 0).

Dans une étape 320 (SBS_CFGR2 REGISTER UNLOCKED), postérieure à l'étape 318, le fait que le bit de blocage soit mis à sa valeur de déblocage, autorise de nouveau la modification du registre SBS_CFGR2.

Dans une étape 322 (SBS_CFGR2 REGISTER IS WRITTEN WITH DECONNECTION VALUE ECCL=0), le registre SBS_CFGR2 est modifié pour comprendre la valeur de déconnexion (ECCL=0). A la suite de l'étape 322, il est possible de réaliser un test ou de revenir à l'étape 302.

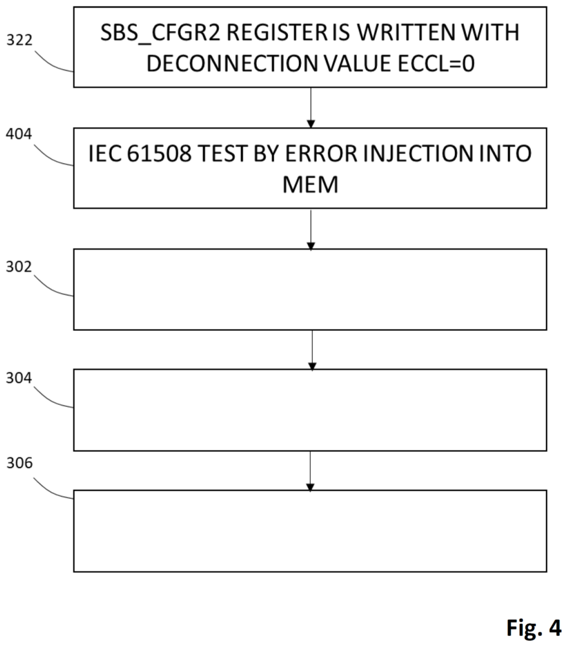

La figure 4 représente un procédé de fonctionnement du microcontrôleur de la figure 2 selon un mode de réalisation.

Le procédé de la figure 4 est similaire à celui de la figure 3 mais avec une étape supplémentaire 404 (IEC 61508 TEST BY ERROR INJECTION INTO MEM).

Dans l'exemple représenté, le procédé comprend les étapes successives 322, 404, 302, 304, et 306 de la figure 3.

Dans l'étape 322, le registre SBS_CFGR2 comprend la valeur de déconnexion (ECCL=0). Dans l'étape 404, qui est mise en œuvre après l'étape 322, il est alors possible de réaliser un test de la mémoire 152 en injectant par exemple des erreurs mémoires et en investiguant le comportement du microcontrôleur 200 pour vérifier s'il réagit de façon prévue. Du fait que le registre SBS_CFGR2 comprenne la valeur de déconnexion (ECCL=0), le test d'injection d'erreurs ne provoquera pas de mise à l'arrêt du processus mis en œuvre par le bloc 111 qui continuera à s'exécuter.

Une fois le test effectué, tout ou partie du procédé de la figure 3 peut être mis en œuvre avec par exemple l'enchaînement des étapes 302, 304 et 306 pour rétablir la fonctionnalité de mise à l'arrêt du processus mis en œuvre par le bloc 111 lorsqu'une ou des erreurs sont détectées par le bloc 142 tout en empêchant les arrêts intempestifs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le bit de blocage 202 peut faire partie du registre SBS_CFGR2 ou peut être agencé à un autre emplacement du microcontrôleur 100. De plus, la mémoire 152 peut être d'un autre type que le type RAM, comme par exemple une mémoire de type MRAM, EEPROM, de type non volatile, de type FLASH, ou à changement de phase.

Enfin, la mise en œuvre pratique des modes de réalisation et variantes décrits est à la portée de la personne du métier à partir des indications fonctionnelles données ci-dessus. En particulier, pour ce qui est de la fonction logique ET (119), la personne du métier pourra choisir de mettre en œuvre une autre fonction logique en modifiant de façon idoine les valeurs ou états des signaux en sortie des blocs 128, 142 et en entrée 109 du bloc 111 de sorte qu'ils soient par exemple inversés par rapport à ceux donnés en exemple. Il conviendra de s'assurer que la fonctionnalité de mise à l'arrêt du processus du bloc 111, lorsqu'une ou des erreurs sont détectées par le bloc 142, soit en action lorsque le registre SBS_CFGR2 comprend une valeur affectée à l'activation de cette fonctionnalité. Dans un exemple, différents types de tests peuvent être mis en œuvre et différents de l'injection d'erreurs, du moment qu'ils soient susceptibles d'engendrer des erreurs détectées par le bloc 142. Additionnellement, même si cas de l'arrêt du processus mis en œuvre par le bloc 111 a été décrit, la personne du métier pourra mettre en œuvre l'arrêt de tout processus mis en œuvre par le microcontrôleur 200.

## Revendications

1. Microcontrôleur (200) comprenant :
- une mémoire (152) ;
- un bloc de calcul de code de correction d'erreur (142) de cette mémoire ;
- un premier registre (SBS_CFGR2) ; et
- un premier bit (202) qui, lorsqu'il a une première valeur et que le premier registre (SBS_CFGR2) comprend une deuxième valeur (ECCL=1), entraîne l'interdiction de la modification du contenu du premier registre (SBS_CFGR2) jusqu'à ce qu'une séquence donnée soit écrite dans un deuxième registre (SBS_KEYR) du microcontrôleur (200).

2. Procédé de fonctionnement d'un microcontrôleur comprenant une mémoire (152), un bloc de calcul de code de correction d'erreur (142) de cette mémoire (152), un premier registre (SBS_CFGR2), et un deuxième registre (SBS_KEYR);
procédé dans lequel, lorsqu'un premier bit est mis à une première valeur et que le premier registre (SBS_CFGR2) comprend une deuxième valeur (ECCL=1), cela entraîne l'interdiction de la modification du contenu du premier registre (SBS_CFGR2) jusqu'à ce qu'une séquence donnée soit écrite dans le deuxième registre (SBS_KEYR) du microcontrôleur (200).

3. Microcontrôleur selon la revendication 1, ou procédé selon la revendication 2, dans lequel :
- lorsque le premier registre (SBS_CFGR2) a la deuxième valeur (ECCL=1) et qu'une ou plusieurs erreurs sont détectées par le bloc de calcul (142), au moins un processus mis en œuvre par le microcontrôleur (200) est arrêté ; et
- lorsque le premier registre (SBS_CFGR2) a une troisième valeur (ECCL=0) et qu'une ou plusieurs erreurs sont détectées par le bloc de calcul (142), ledit au moins un processus se poursuit.

4. Microcontrôleur ou procédé selon la revendication 3, dans lequel ledit processus est un fonctionnement d'un circuit (111), de préférence un circuit (111) de modulation de largeur d'impulsions, du microcontrôleur (200).

5. Microcontrôleur ou procédé selon la revendication 3 ou 4, dans lequel, lorsque le contenu du premier registre (SBS_CFGR2) a la deuxième valeur (ECCL=1) alors un générateur (128) d'un premier signal (Timer_break_enable) est activé et le premier signal (Timer_break_enable) est à un état d'activation, et lorsque le contenu du premier registre (SBS_CFGR2) a la troisième valeur (ECCL=0) alors le générateur (128) est désactivé et le premier signal (Timer_break_enable) est à un état de désactivation.

6. Microcontrôleur ou procédé selon la revendication précédente, dans lequel, lorsque le générateur (128) est activé et qu'une ou plusieurs erreurs sont détectées par le bloc de calcul (142), alors un deuxième signal (Timer_break), configuré pour être présent sur une entrée (109) d'un circuit (111) mettant en œuvre ledit processus, prend une valeur entraînant l'arrêt dudit processus.

7. Microcontrôleur selon l'une quelconque des revendications 1, ou 3 à 6, ou procédé selon l'une quelconque des revendications 2 à 6, dans lequel le premier bit, lorsqu'il a la première valeur et que le premier registre (SBS_CFGR2) a la deuxième valeur (ECCL=1), empêche la modification du contenu du premier registre (SBS_CFGR2) jusqu'à réinitialisation du microcontrôleur (200).

8. Microcontrôleur ou procédé selon l'une quelconque des revendications 3, ou 4 à 7 dans leur dépendance à la revendication 3, dans lequel le bloc de calcul de code de correction d'erreur (142) est configuré pour détecter une seule erreur et la corriger.

9. Microcontrôleur ou procédé selon l'une quelconque des revendications 3, ou 4 à 7 dans leur dépendance à la revendication 3, dans lequel le bloc de calcul de code de correction d'erreur (142) est configuré pour détecter deux erreurs et en corriger une des deux.

10. Microcontrôleur ou procédé selon l'une quelconque des revendications 3, ou 4 à 7 dans leur dépendance à la revendication 3, dans lequel le bloc de calcul de code de correction d'erreur (142) est configuré pour détecter trois erreurs et en corriger deux des trois.

11. Microcontrôleur selon l'une quelconque des revendications 1, ou 3 à 10, ou procédé selon l'une quelconque des revendications 2 à 10, dans lequel, après que ladite séquence ait été écrite dans le deuxième registre (SBS_KEYR), le premier bit est mis à une quatrième valeur qui autorise la modification du contenu du premier registre (SES_CFGR2).

12. Microcontrôleur ou procédé selon la revendication 11 dans sa dépendance à la revendication 3, dans lequel après ladite autorisation, le contenu du premier registre passe de la deuxième valeur (ECCL=1) à la troisième valeur (ECCL=0) .

13. Microcontrôleur ou procédé selon l'une quelconque des revendications 6, ou 7 à 12 dans leur dépendance à la revendication 6, dans lequel, lorsque le générateur (128) est désactivé (ECCL=0) et qu'une ou plusieurs erreurs sont détectées par le bloc de calcul (142), alors le deuxième signal (Timer_break) prend une valeur n'entraînant pas de modification dudit processus.

14. Microcontrôleur ou procédé selon l'une quelconque des revendications 12 ou 13 dans sa dépendance à la revendication 12, dans lequel la mise à la troisième valeur (ECCL=0) du premier registre (SBS_CFGR2) est suivie de la mise en œuvre d'un programme de test comprenant l'injection d'une ou plusieurs erreurs dans la mémoire (152) et la vérification de la réponse du microcontrôleur (200).

15. Microcontrôleur selon l'une quelconque des revendications 1, ou 3 à 14, ou procédé selon l'une quelconque des revendications 2 à 14, dans lequel ladite séquence correspond à l'écriture de deux clés dans le deuxième registre (SBS_KEYR) ;
ou dans lequel le premier registre (SBS_CFGR2) comprend ledit premier bit ;
ou dans lequel ladite mémoire (152) est une mémoire de type RAM.
